# EUROPEAN PATENT SPECIFICATION

(11) **EP 0 275 657 B1**
(45) Date of publication and mention of the grant of the patent: **21.04.1993**
(21) Application number: 87310928.4
(22) Date of filing: 11.12.1987
(51) Int. Cl.: G11B 27/11, G11B 23/30, G11B 23/03, G11B 7/00

(54) **Optical recording medium**
Optisches Aufzeichnungsmedium
Milieu d'enregistrement optique

(30) Priority: 15.12.1986 JP 296714/86; 30.01.1987 JP 18560/87
(43) Date of publication of application: 27.07.1988
(73) Proprietor: Hitachi Maxell Ltd., Osaka-fu (JP)
(72) Inventor: Iida, Tamotu, Tsuchiura-shi (JP)
(74) Representative: Senior, Alan Murray

(56) References cited:
- EP-A- 147 337
- EP-A- 0 029 946
- EP-A- 0 158 906
- BE-A- 871 596
- JP-A-61 170 929
- PATENT ABSTRACTS OF JAPAN, vol. 9, no. 133 (P-362)[1856], 8th June 1985; & JP-A-60 15 880
- PATENT ABSTRACTS OF JAPAN, vol. 10, no. 312 (P-509)[2368], 23rd October 1986; & JP-A-61 123 077
- PATENT ABSTRACTS OF JAPAN, vol. 9, no. 221 (P-386)[1944], 7th September 1985; & JP-A-60 80 163
- PATENT ABSTRACTS OF JAPAN, vol. 10, no. 26 (P-425)[2083], 31st January 1986; & JP-A-60 176 187
- PATENT ABSTRACTS OF JAPAN, vol. 5, no. 165 (P-85)[837], 22nd October 1981; & JP-A-56 945 565
- PATENT ABSTRACTS OF JAPAN, vol. 11, no. 350 (P-637)[2797], 17th November 1987; & JP-A-62 128 084
- PATENT ABSTRACTS OF JAPAN, vol. 11, no. 207 (P-592)[2654], 4th July 1987; & JP-A-62 26 680
- PATENT ABSTRACTS OF JAPAN, vol. 8, no. 159 (P-289)[1596], 24th July 1984; & JP-A-59 56 267
- PATENT ABSTRACTS OF JAPAN, vol. 8, no. 208 (P-302)[1645], 21st September 1984; & JP-A-59 92 474

## Description

### BACKGROUND OF THE INVENTION

This invention relates to an optical recording medium and more particularly to an optical recording medium that is capable of controlling the access to the recording contents of the optical recording medium from a system side.

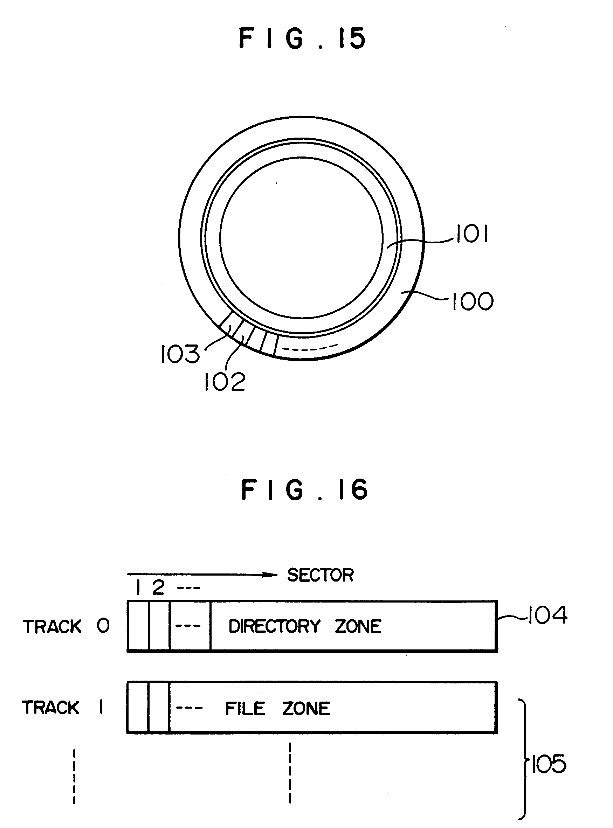

Generally, as shown in Fig. 15, the format of an optical disk is constituted by a great number of spiral and concentric tracks 100, 101, ..... each of which is sectioned by many sectors 102, 103, ...... These tracks 100, 101, ..... provided with track addresses, with the sectors provided with sector numbers, are adapted to be able to record a large amount of information.

Fig. 16 schematically shows the relation between these tracks and the sectors. As seen from the figure, these tracks of the optical disk are numbered in a manner of track 0, track 1, track 2, ..... in order from the inner most track; outermost track is allotted for a directory zone 104 for controlling the file data recorded in this optical disk, and the tracks from track 1 onwards are allotted for file zones 105.

Recorded in the directory zone 104 are the data for controlling and discriminating the information to be recorded such as label indexes (label ID), file names, record length (maximum number of characters per 1 block), BOE addresses (address of a beginning sector of a file), EOE addresses (end address of a file), bypass flags (indication of data transfer), write protect flags, multi-volume flags (presence of a succeeding disk), EOD addresses (end address of entry data), etc. Thus, the information data (file data) recorded in the tracks from track 1 onwards are accessed in accordance with the directory of the track O.

In order to recognize the index information and/or disk specification from a system side in the case of the above prior art disk, the optical disk must be once driven by an optical disk drive to provide the information of read signals, which is very troublesome.

In some cases, the specification of the optical disk may not be adapted to that of the optical disk drive device. In this case, if the optical disk is driven by the disk drive device, the reproducing laser power may destroy the recorded film.

JP-A-60-15880 discloses an optical recording disk which is provided with a semiconductor memory element mounted on the disk casing and stores index information relating to the configuration of the information on the disk, i.e. the index information.

It has also been proposed, for example in JP-A-60-176187, to provide a semiconductor card with a memory control circuit and optical connector so that the information in the card can be read without the need for exposed electrical contacts which can allow static electricity to damage the memory.

EP-A3-147337 discloses an optical storage medium in accordance with the pre-characterizing portion of claim 1 and in which an optical storage card is provided with a semiconductor processing element and storage element storing a key required for decoding the information on the optical storage medium. Information to be read from or stored to the optical medium is first supplied by the read/write device to the semiconductor processing element which decodes/codes it and returns it to the read/write device which, in the case of writing then writes it on the optical storage medium.

An object of this invention is to provide a high reliability optical recording medium that has an improved capability for easily accessing recorded information and of ensuring the integrity of information.

The present invention is characterized in that said semiconductor memory element is arranged to store information relating to the inherent spatial configuration of that particular optical recording medium in its carrier and in that: the connector is disposed in said carrier for transmitting information from the semiconductor memory element via the semiconductor processing element to the optical read/write device before operation thereof, said optical read/write device being adapted to assume an initial condition according to the information transmitted thereto and to read the optical recording medium while compensating for the spatial configuration thereof using the information transmitted thereto.

Additionally, rapid and reliable transmission of the signals from the processor to the optical read/write device is ensured by utilising an optical connector, instead of using mechanical contacts which are less reliable through their life than optical connectors for passing detailed information to and from an optical recording medium. Thus, with the features of the invention, as characterised in claim 1, the optical read/write device performs required read/write operations from/to the optical recording region with reference to the information received from the semiconductor memory element via the semiconductor processing element and the optical connector utilising servocontrol information relating to the physical characteristics of the particular disk.

### Brief Description of the Drawings

Figures 1 to 3 are a plan view, a front view and a partially perspective view of an optical disk cartridge embodying some only of the features of this invention;
Figure 4 to 6 are views for explaining an optical disk cartridge according to a first embodiment of the invention, Figure 4 is a plan view of a lower case of the optical disk cartridge, Figure 5 is a bottom view of the lower case and Figure 6 is an enlarged sectional view of the connector portion between the optical disk cartridge and an optical drive device;
Figure 7 is a perspective view of an optical card according to a second embodiment of this invention;
Figure 8 is a block diagram for explaining the signal flow between the optical card of Figure 7 and an optical drive device;
Figure 9 is a block diagram of a third embodiment of this invention;
Figure 10 and 11 are perspective views of the sides of a front surface and a back surface of an optical card according to a fourth embodiment of this invention, respectively;
Figure 12 is a view of a schematic arrangement showing the states drawing recording and reproducing of the optical card shown in Figures 10 and 11;
Figures 13 and 14 are perspective views on the sides of a front surface and a back surface of an optical card according to a fifth embodiment of this invention, respectively;
Figure 15 is a view for explaining the format of a prior art optical disk;
Figure 16 is a schematic view showing the relation between the tracks and sectors in the prior art optical disk; and
Figure 17 is a perspective view of an optical recording medium according to a sixth embodiment of this invention.

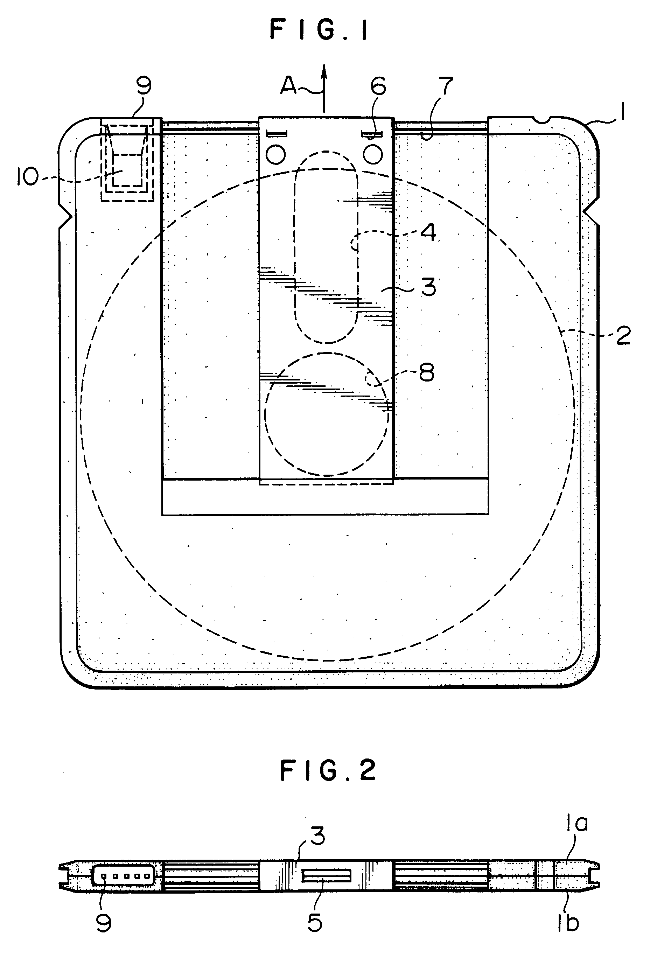

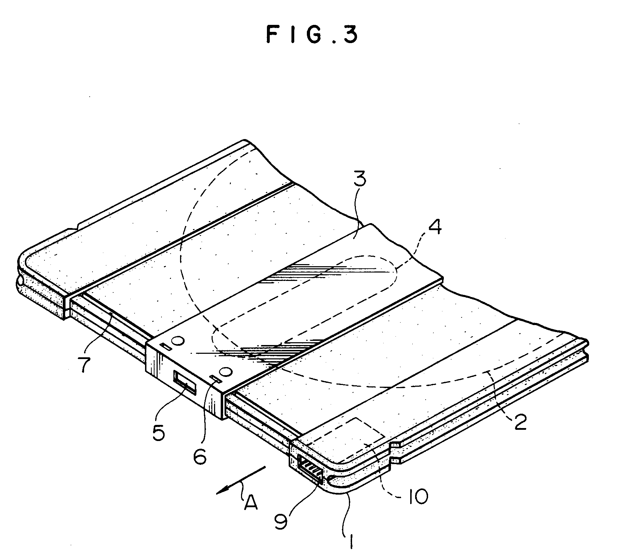

Figure 1 is a plan view of an optical disk cartridge. Figure 2 is a front view of the optical disk cartridge of Figure 1 and Figure 3 is a perspective view of a main part of the optical disk cartridge.

The optical disk cartridge is mainly constituted by a cartridge case 1 of synthetic resin, an optical disk 2 rotatably mounted in this cartridge case 1 and a metallic shutter 3 with the side folded in a U character shape.

As seen from Fig. 2 the cartridge case 1 consisting of an upper case 1a and a lower case 1b has a space for mounting the optical disk, which is formed by bonding both cases 1a and 1b using a screw or the like. As seen from Fig. 1, a head access opening 4 is located at a predetermined position within the cartridge case 1 and the shutter 3 is always pushed so as to close the head access opening 4.

As seen from Figs. 2 and 3, the shutter 3 formed from a metallic thin plate of e.g. stainless steel has, at its front side, an engagement opening 5 for opening the shutter 3 in engagement with an opening member (not shown) of an optical drive device. Also, the shutter 3 has an inner projection 6 that is inserted in a guide groove 7 provided in the cartridge case 1 in order to guide the opening/closing operation of the shutter 3. As shown in Fig. 1, when the optical disk cartridge is not used, the shutter 3 is retained by a spring member (not shown) at a position closing the head access opening 4 and a spindle opening 8.

The optical disk 2 has recording films formed on its both surfaces, on each of which many spiral and concentric recording tracks are formed; each of the tracks is sectioned into many sectors in the peripheral direction thereof. These recording tracks are accompanied by track addresses and the sectors are accompanied by sector numbers so that the tracks are adapted to be able to record a large amount of information in regulated manner. The optical disk 2 is ordinarily accomodated in a non-rotating state in the cartridge case 1. The cartridge case is mounted in the drive device, so that the optical disk is rotatable by a not shown mechanism when the shutter 3 opens.

A connector 9 is provided on the side of the front surface of the cartridge case 1 at the location other than the rotating region of the optical disk 2 within the cartridge case 1; the connector 9 is directed in the insertion direction A of the optical disk cartridge in the drive device as shown in Figs. 1 and 3. The connector 9 is connected with a semiconductor memory 10 that is also mounted and fixed within the cartridge case 1 for the protection. The connector 9 may have the function for wire connection or may incorporate a terminal having a light emitting element and a light detecting element, thereby permitting information communication through contactless optical signal communication. The connector 9 is joined with another connector on the drive device by mounting the optical disk cartridge to the drive device. Therefore, when the cartridge case can be used in its turned-over state, connectors must be provided at both left and right positions on the side of the drive device.

The semiconductor memory 10 is provided with a memory element including a read only memory (ROM) or/and random access memory (RAM) for storing several kinds of information that will be described later, and a semiconductor microprocessing unit (MPU). Additionally, when RAM is used as a memory element, a backup power source is provided in the semiconductor memory 10.

Further, in a system in which no cartridge case is used, it is possible to provide a port for transmitting/receiving signals and power at the hub portion of a rotating optical disk and to provide the above memory element and MPU in the optical disk.

Previously stored in the memory element is the information related to recorded information retrieval such as label indexes (label ID), file names, record lengths (maximum number of characters per 1 block), BOE addresses (address of a beginning sector of a file), EOE address (end address of a file), bypass flags (indication of data transfer), write protect flags, multi-volume flags (presence of a succeeding disk), EOD address (end address of entry data), etc. Also, the above information relates to recorded information retrieval can be changed or added as required.

Thus, since the above retrieval-related information has been previously stored in the semiconductor memory 10, the address of required information can be immediately recognized so that information retrieval can be efficiently performed in a short time. Further, since the retrieval-related information is stored in the semiconductor memory 10, the directory zone of the optical disk 2 can be omitted, thus increasing the storage capacity.

Also previously stored in the memory element is defect information, which is provided by checking or evaluating the optical disk 2, i.e. defective track addresses or sector numbers and alternative track addresses or alternative sector numbers which are related to each other.

In the prior art optical disk, the signal read for checking is carried out after the writing of information to detect any error, and then the writing of information is carried out with another address (alternative track or alternative sector) and the signal checking is carried out again. Therefore, although the optical disk has been previously checked or evaluated, information is also ordinarily written in defective addresses, thus taking a very long time to write correct information. On the other hand, with the present construction, the defect information previously stored in the memory element is read out and the access to the optical disk is performed on the basis of this information so that the information write time can be shortened.

Further, write sensitivity information of the optical disk 2 can be stored in the above memory element. The write sensitivity of the optical disk 2 to write laser power depends upon e.g. material, composition and thickness of a recording film, linear velocity in tracking, pulse width, etc. The standard write sensitivity of the optical disk 2 is previously stored during the check or evaluation thereof. On the other hand, since an individual drive device is necessarily accompanied by characteristic variation in the optical system used, the drive device individually evaluates the write sensitivity to provide a difference between this evaluated data and the above standard write sensitivity, which is newly stored in the memory element. Thus, if the writing of information is carried out under the write condition in accordance with the drive device used, the information write free from missing shot can be assured.

Further, previously stored in the memory element can be physical access information (e.g. axial runout, tilt, radial runout, etc. of the optical disk) which results when the optical disk 2 is accessed by the drive device. Thus, if the physical access information has been previously stored, the optical disk 2 can be more properly driven by compensating for the servo control on the side of the drive device in accordance with the stored physical access information.

Furthermore, previously stored in the memory element can also be predetermined playback control data which is required to play back the information recorded in the optical disk 2, e.g. a generator polynomial of an error detection and correction code, an interleave function, data modulation method (e.g. Run-Length Limiting RLL (2.7), Modified Frequency Modulation (MFM) modulation, etc.) etc. Then, in the case where this playback control data is not employed, the information recorded in the optical disk 2 can not be played back, thereby ensuring integrity or no leakage of information.

Explanation will be given for a method for preventing the information retrieval by an outsider using the generater polynomial of the error detection and correction code.

First, the contents X of the information to be essentially recorded and the contents Y of the additional information that is obtained from the contents X and the generater polynomial, are recorded together on an optical recording medium (optical disk).

When the recorded information is played back, additional information y in the recorded information is detected. If the detected additional information y is judged to be Y, the recorded essential information X is played back as it is under the judgement that it does not include any error. On the other hand, if the additional information y has changed to Yʹ, the recorded information is cancelled or corrected in a prescribed manner under the judgement that it includes some error.

In this case, if a polynomial for playback different from the polynomial employed for recording is used, Y ≠ y (i.e. the judgement Y → Yʹ occurs). Thus, although the recorded information does not include any error, it will be cancelled. Therefore, it is impossible to play back the information without noticing the generater polynomial employed for recording, which prevents the outsider from retrieving the information.

Several kinds of the recording control information previously stored in the memory element as mentioned above, such as the retrieval-related information, defect information, recording sensitivity information access information, playback control data, etc. may be stored either individually or in a combination manner.

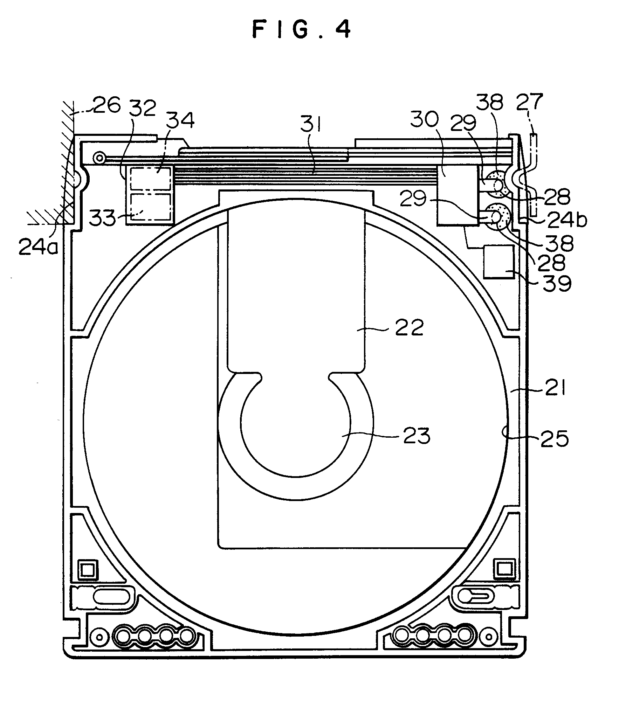

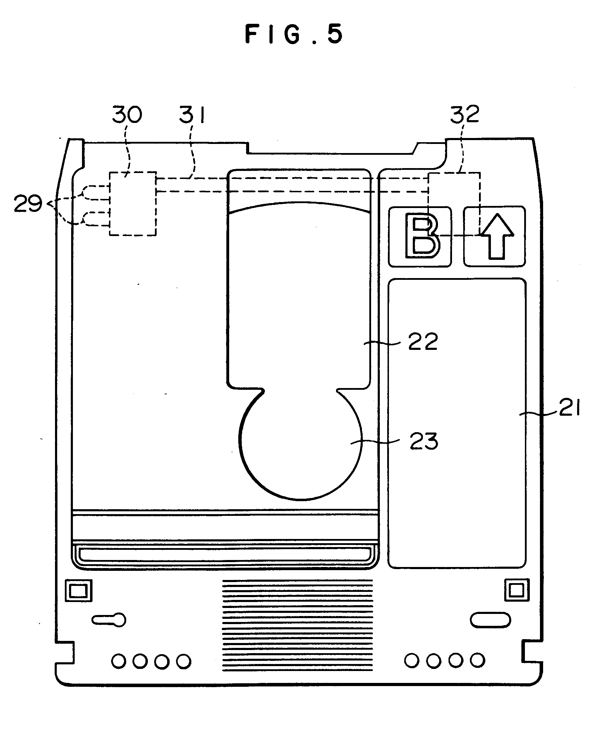

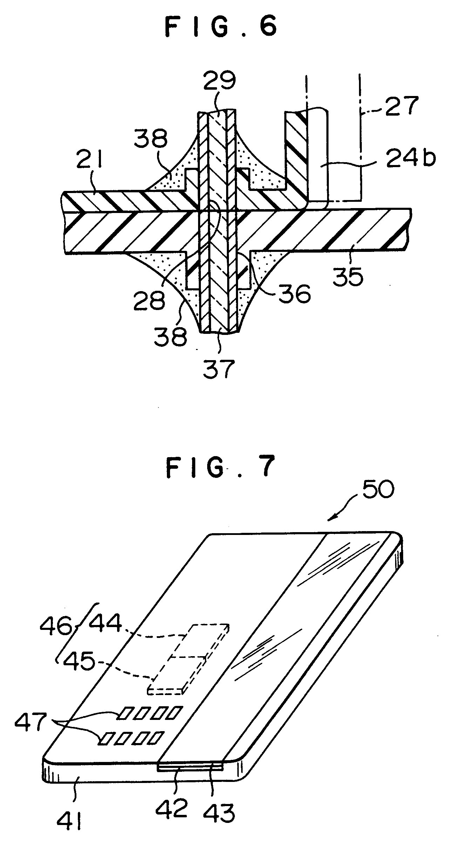

Figs. 4 to 6 intend to explain an optical disk cartridge according to a first embodiment of this invention; Fig. 4 is a plan view of a lower case of the optical disk cartridge, Fig. 5 is a bottom view thereof and Fig. 6 is an enlarged sectional view of the connector portion between the optical disk cartridge and an optical drive device.

In the optical disk cartridge according to this embodiment, as shown in Figs. 4 and 5, a head access opening 22 and a spindle opening 23 which are formed in the lower case 21 are communicated to each other. A concave portion 25 for accomodating an optical disk (not shown) is formed at a substantially central portion of the lower case 21.

As shown in Fig. 4, positioning recess portions 24a and 24b are formed on both sides of the front surface of the lower case 21. Although not shown, positioning recess portions are also formed at the corresponding portions of an upper case of the optical disk cartridge. When this optical disk cartridge is mounted to the drive device, as shown in Fig. 4, a stopper 26 of the drive device is inserted in the one positioning recess portion 24a, and a spring member 27 of the drive device is inserted in the other positioning recess portion 24b. By pushing the optical disk cartridge toward the stopper 26 side by means of the spring force of the spring member 27, the optical disk cartridge is properly positioned in the drive device.

As shown in Figs. 4 and 6, an opening 28 is formed in the neighborhood of the other positioning recess portion 24b on the bottom face of the lower case 21. One end of a disk side optical fiber 29 is inserted into and fixed to the opening 28 and the edge surface of the disk side optical fiber 29 is exposed to the bottom face of the lower case 21. As shown in Fig. 4 the other end of the disk side optical fiber 29 is connected with an input/output circuit 30 loaded with electronic components such as a charge coupled device (CCD). The input/output circuit 30 is connected with a semiconductor memory 32 through a signal cable 31. The semiconductor memory 32 is provided with a memory element 33 consisting of ROM and/or RAM and a semiconductor microprocessing unit (MPU) 34.

Incidentally, the semiconductor memory 32 may be provided in the concave portion 25 so as to be not in contact with the optical disk. Numeral 39 in Fig. 4 is a power supply for driving a light emitting device (not shown) emitting light from the optical fiber 29.

On the other hand, as shown in Fig. 6, in the drive device, an opening is formed in its upper plate 35. One end of a drive side optical fiber 37 is inserted into and fixed to the opening 36. The edge surface of the drive side optical fiber 37 is projected from the upper plate 35. The other end of the drive side optical fiber 37 is connected with a drive side control portion (not shown).

When the optical disk cartridge is mounted to the drive device, as shown in Fig. 6, the disk side optical fiber 29 is opposed to the drive side optical fiber 37 so that the signal communication between the optical disk cartridge and the drive device can be optically carried out. As mentioned above, the disk side optical fiber 29 is located in the neighborhood of the positioning portion so that the contact to the drive device can be advantageously made with high position accuracy. Additionally, numeral 38 in Figs. 4 and 6 is a bonding agent layer for fiber fixing.

Fig. 7 is a view for explaining an optical card in accordance with a second embodiment of this invention.

A card body 41 of a hard plastic thin plate is provided with a stripe-shaped optical recording film 42 embedded therein in its longitudinal direction and a protection film 43 formed on the recording film 42.

The card body 41 is further provided with a semiconductor memory 46 embedded therein at the location other than where the optical recording film 42 is placed; this semiconductor memory 46 comprises a memory element 44 consisting of a ROM and/or RAM and a semiconductor micro-processing unit (MPU) 45. The semiconductor memory 46 is connected with connectors 47 which are protruded from the card body 41.

The optical card itself with an optical recording film formed on its surface provides for the recording and playback of data by means of laser light irradiated from the exterior. The conventional optical card does not have the function of operation so that an outsider can record and play back the data using a drive unit that can drive the optical card. Then, if an owner of the card wants to place the data in the case under his control, the card is required to have the function of data protection through which the data are closed in the card. The functions of data operation and data control are required to implement the function of data protection so that it is necessary to provide the semiconductor memory 46 provided with the memory element 44 and the semiconductor microprocessing unit 45, as in the second embodiment, thereby permitting the operation and control of data to be performed in the card.

As well known, one feature of the semiconductor memory 46 is to be able to process data at a higher speed than in the other recording medium. Therefore, by previously storing in the memory elements 44 the index information for the data recorded in the optical recording film 42, it is possible to search the data at a high speed in response to the requirement of data retrieval, thereby greatly shortening the average access time in the optical system.

The memory area of the memory element 44 can be divided into division areas or sub-memory areas so that the control information required for each sub-memory area can be stored therein. In this way, each sub-memory-area can be individually used, and thus plural optical cards can be united into one optical card.

Further, if a different data scrambling method is used for each sub-memory area, the data are not erroneously read out. Also, CRC (cyclic redundancy check) for the sub-memory areas prevents the data from being erroneously read out, thus obviating the exposure of the data.

Furthermore, if a different CRC generater polynomial is used for each sub-memory area, the data are not erroneously read out. This is in this case because the recording and playback of data can be performed only by the drive device corresponding to the sub-memory area.

Also stored in this optical card, as in the case of the optical disk cartridge as mentioned above, are one or more kinds of record-related control information such as retrieval-related information, defect information, record sensitivity information, access information, playback control information, etc.

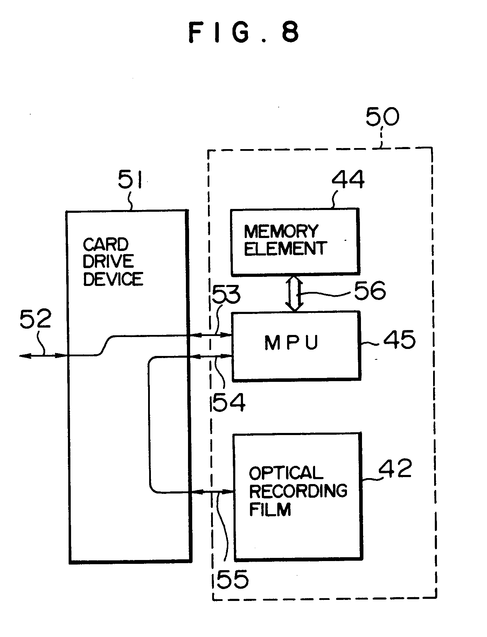

Fig. 8 is a block diagram showing the signal communication between the optical card 50 and a card drive device 51. In this figure, 42 is the optical recording film, 44 is the memory element, 45 is the semiconductor microprocessing unit (MPU), 50 is the optical card, 51 is the card drive device, 52 is a drive control signal, 53 is a drive-arithmetic and logic unit signal, 54 is an optical record-operational element signal 1, 55 is an optical record-operational element signal 2, and 56 is a memory element-operational element signal.

In operation, the data recorded in the optical recording film 42 are sent to the semiconductor MPU 45 through the drive device 51, and the processing of the data is performed there by means of the memory element 44. If any error does not occur, the data are sent to an external device (e.g. host computer) again through the drive device 51.

In this case, the drive device 51 deals with the communication sequence between itself and the external device and between itself and the MPU 45 and the access control of the optical card 50. The MPU 45 deals with the decode of the optical card signals and the error correction processing. The memory element 44 stores the information required for data control such as the index information scramble function and CRC generator polynomial, etc. of the recorded data.

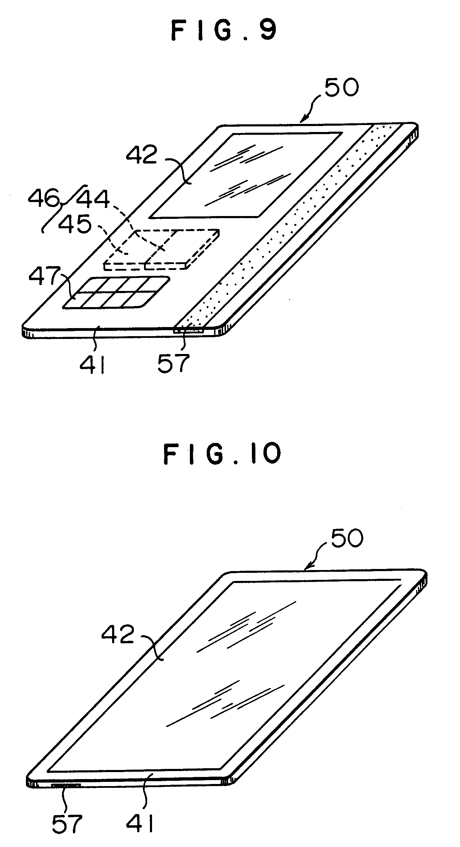

Fig. 9 shows an optical card according to a third embodiment of this invention. The optical card in this embodiment is different from the optical card of Fig. 7 in that a stripe shaped magnetic layer 57 is formed so that information can also be magnetically recorded. In this embodiment, the control information for the data recorded in the magnetic layer 57 is also stored in the semiconductor memory 46.

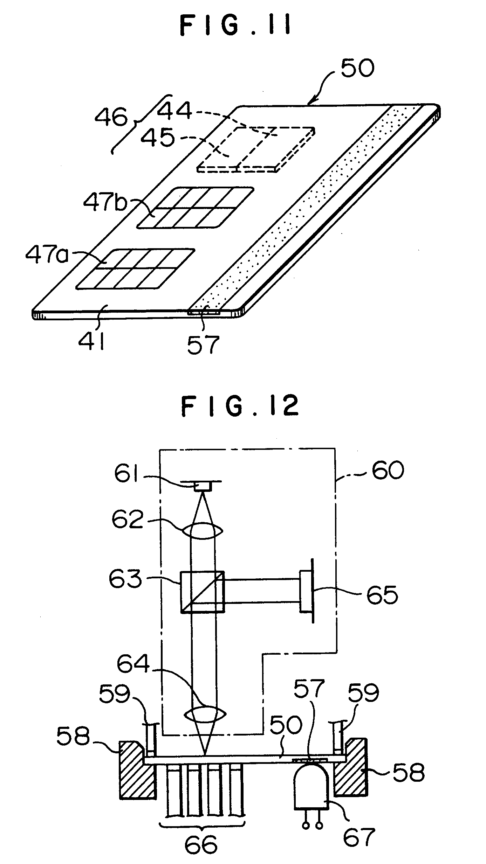

Figs. 10 and 11 show an optical card according to a fourth embodiment of this invention. A first difference of the optical card according to this embodiment from the optical card shown in Fig. 9 is that in this embodiment, as shown in Fig. 10, the optical recording film 42 is formed on the substantially entire portion of one surface of the card body 41 while the connector 47 and the magnetic lager 57 are formed on the other surface of the card body 41.

A second difference is that the extension of the record area of the optical recording film 42, as mentioned above, increases the recording capacity (i.e. the number of recording tracks) so that the connector 47 is grouped into plural groups such as a first connector 47a and a second connector 47b.

When the number of recording tracks is increased as in this embodiment, it is difficult to provide the connector 47 at one location in view of the circuit wiring. However, the grouping of the connector 47 into plural groups can facilitate the wiring or design of the circuit. This also enables the recording tracks to be simultaneously used.

Fig. 12 shows a schematic arrangement showing the state during the recording or playback of this optical card. By setting the optical card 50 in a holder 58 so that its optical recording film 42 is laid above, the positioning of the optical card 50 in the drive device is made. 59 is a spring for holding the positioning state of the optical card 50.

A head (recording head or playback head) 60 located above the optical card 50 or the optical recording film 42 performs the recording or playback of data for the optical card 50. This head 60 is mainly composed of a laser light source 61, a lens 62, a beam splitter 63, an objective lens 64 and a photo-electric converter 65.

With the optical card 50 set in the holder 58, plural contact terminals 66 provided on the drive device side are in contact with the connectors 47, respectively. A magnetic head 67 is adapted to contact the magnetic layer 57 of the optical card so that the recording or playback of data can also be magnetically carried out.

As in this embodiment, by separating the optical recording film 42 and the connector 47 in such a manner that the optical recording film 42 is provided on one surface of the card body 41 while the connector 47 is provided on the other surface thereof, the damage of the optical recording film 42 due to the contact terminals can be prevented.

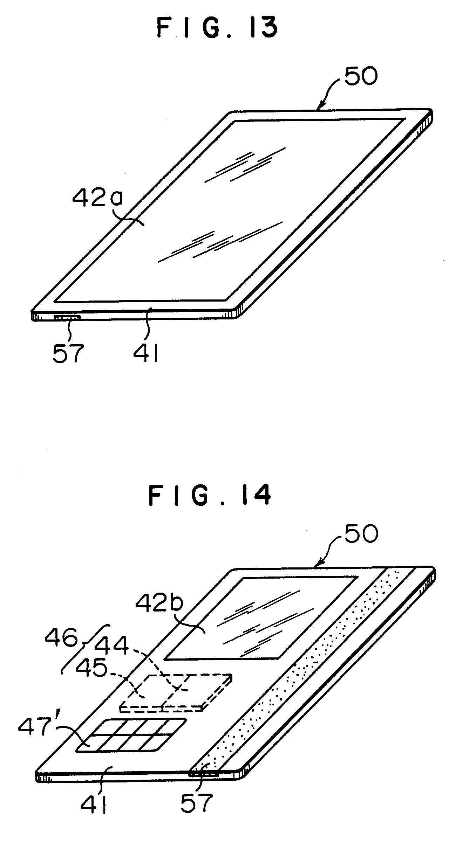

Figs. 13 and 14 show an optical card according to a fifth embodiment of this invention. The optical card in this embodiment is different from that of Figs. 10 and 11 in that a first optical recording film 42a and a second optical recording film 42b are formed on both the front and back surfaces of the card body 41.

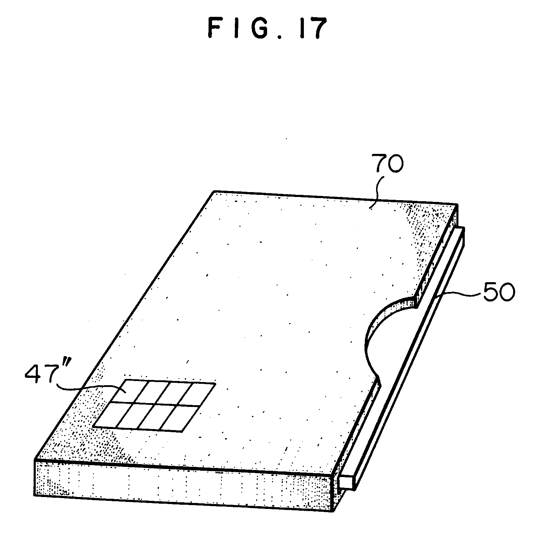

Fig. 17 shows an optical recording medium according to a sixth embodiment of this invention, in which the optical card 50 as shown in Figs. 10 and 11 (fourth embodiment) is used in a state where it is received in a plastic case 70. The case 70 is, on its inside, a connector terminal 47' capable of directly communicating with the optical card 50 in such a manner that when the optical card 50 is inserted into the case 70, the terminal 47' is laid on or brought into contact with the connector terminal 47 of the optical card 50. Also, the case 70 is, on its outside, provided with a connector 47'' capable of an external device when the case 70 incorporating the optical card 50 is mounted in the external device. The terminals 47' and 47'' may be formed individually or unitedly. The connector 47' or 47'', when provided with a light emitting element and a light detecting element, enables further signal communication having high releability. If the optical card 50 is used in a state a here it is received in the case 70 in accordance with this embodiment, it is advantageously possible to prevent dust of minute particles, which is harmful to the communication of optical information signals, from being applied to the surface of the optical card 50 or flows from being created on the optical recording film or the protective film thereof of the optical card 50.

Further, an optical disk incorporating a semiconductor memory may be used in place of the optical card 50. In this case, a connector is provided on the inner peripheral wall of the optical disk and another connector is also provided in a disk cartridge case in which the optical disk is received. The signal communication can be made between the optical disk and the disk cartridge case by means of a spindle shaft of an electric motor for driving the optical disc.

In this embodiment, if the standardized connector 47' or 47'' and/or magnetic layer 57 are provided, it is possible to take the compatibility with the IC card system or magnetic card system that has been commonly used.

Furthermore, if the card cases for protecting the optical cards are adapted to correspond to the optical cards, respectively, the memory element, MPU and connector may be mounted in the card case instead of the optical card.

## Claims

1. An optical recording system comprising, in combination:
an optical read/write device;
a carrier (1,70,41);
an optical recording medium (2,42,42a,b,50) received in the carrier (1,70,41) and having an optical recording region where information is optically stored;
a semiconductor memory element (32,46) for storing control information related to said recording region (2,42) where information is optically stored, said semi-conductor memory element (32,46) being provided at a location in said carrier (1,70,41) other than the recording region, and
a connector (29,47) on said carrier (1,70,41) for performing signal communication between the semiconductor memory element (32,46) and the read/write device, said connector (29,47) being connected to the semiconductor memory element (32,46), a semiconductor processing element (45) controlling transmission of information stored in the semiconductor memory element (32,46) to the optical read/write device and disposed in said carrier (1,70,41), characterised in that:
said semiconductor memory element (32,46) is arranged to store information relating to the inherent spatial configuration of that particular optical recording medium (2,42,42a,b,50) in its carrier (1,70,41); and in that:
the connector (29,47) is disposed in said carrier (1,70,41) for transmitting information from the semiconductor memory element (32,46) via the semiconductor processing element (45) to the optical read/write device before operation thereof, said optical read/write device being adapted to assume an initial condition according to the information transmitted thereto and to read the optical recording medium while compensating for the spatial configuration thereof using the information transmitted thereto.

2. An optical recording system according to claim 1, wherein said recording medium comprises an optical disk (2) having recording tracks, said carrier comprises a cartridge case (1) for rotatably receiving the optical disk, and said semiconductor memory element (34) and said connector (29), which is an optical connector, are attached to said cartridge case.

3. An optical recording system according to claim 2, wherein said connector (29) is attached in the neighbourhood of a portion (24b) of the cartridge case positioning the cartridge case in relation to the optical read/write device.

4. An optical recording system according to claim 1, wherein said carrier comprises a card body (41) and said optical recording medium comprises an optical recording film (42) embedded in the card body, said optical recording film having recording tracks, said semiconductor memory element (44) and said optical connector (47) being attached to a location of said card body other than the optical recording film (46).

5. An optical recording system according to claim 4, wherein said optical recording film (42) is provided in one surface of said card body (41) while said optical connector (47a,47b) is provided in the other surface of said card body (41).

6. An optical recording system according to claim 5, wherein said optical recording film (42) is provided in substantially the entire surface of one side of the card body (41).

7. An optical recording system according to any preceding claim, wherein said information relating to read/write conditions specific to said optical recording region includes predetermined playback control data required in playing back the information recorded on the recording region.

8. An optical recording system according to any preceding claim, wherein said information relating to read/write conditions specific to said optical recording region includes defect information of the optical recording region.

9. An optical recording system according to any preceding claim, wherein said information relating to read/write conditions specific to said optical recording region includes recording sensitivity information of the optical recording region.

10. An optical recording system according to any preceding claim, wherein said optical recording medium comprises an optical disk (2) and said information relating to said inherent spatial configuration is at least one of axial runout, tilt or radial runout.

11. An optical recording system according to any preceding claim, wherein said connector comprises a light emitting element and a light detecting element that are provided for the communication of optical signals.

12. An optical recording system according to any one of the preceding claims wherein said optical recording medium is an optical disk and the system includes:
a disk drive unit;
the optical recording disk (2) being received in the optical read/write device to be rotated relative thereto under drive transmitted to its hub from the disk drive unit; wherein:
said semiconductor memory element (32) is mounted in the optical recording disk (2) to rotate therewith and in that the connector (29) is an optical connector for transmitting information from the semiconductor memory element (32) to the optical read/write device via a port at the hub portion.

13. An optical disk recording system according to claim 12 wherein the optical connector transmits information via the drive spindle of a motor of the disk drive unit to a cassette containing the disk.

14. An optical recording system according to any one of claims 4 to 6 wherein:
said optical recording film (42) is provided embedded on one surface of the card body, said optical recording film having recording tracks, said semiconductor memory element (44) and said optical connector (47) being attached on the other surface of said card body.

## Patentansprüche

1. Optisches Aufzeichnungssystem, das in Kombination umfaßt:
eine optische Schreib/Lese-Vorrichtung;
einen Träger (1, 70, 41);
ein im Träger (1, 70, 41) enthaltenes optisches Aufzeichnungsmedium (2, 42, 42a, b, 50), das einen optischen Aufzeichnungsbereich aufweist, in dem Information optisch gespeichert ist;
ein Halbleiterspeicherelement (32, 46) zur Speicherung von Kontrollinformation, die sich auf den Aufzeichnungsbereich (2, 42) bezieht, in dem Information optisch gespeichert ist, wobei das Halbleiterspeicherelement (32, 46) an einer anderen Stelle im Träger (1, 70, 41) als der Aufzeichnungsbereich angebracht ist, und
eine Verbindervorrichtung (29, 47) an dem Träger (1, 70, 41) zur Durchführung der Signalübertragung zwischen dem Halbleiterspeicherelement (32, 46) und der Schreib/Lese-Vorrichtung, wobei die Verbindervorrichtung (29, 47) mit dem Halbleiterspeicherelement (32, 46) verbunden ist, ein Halbleiterverarbeitungselement (45) das die Übertragung der im Halbleiterspeicherelement (32, 46) gespeicherten Information zu der optischen Schreib/Lese-Vorrichtung kontrolliert und in dem Träger (1, 70, 41) angeordnet ist,
**dadurch gekennzeichnet,** daß
das Halbleiterspeicherelement (32, 46) eingerichtet ist, um Information über die inhärente räumliche Konfiguration dieses speziellen optischen Aufzeichnungsmediums (2, 42, 42a, b, 50) in seinem Träger (1, 70, 41) zu speichern; und daß
die Verbindervorrichtung (29, 47) in dem Träger (1, 70, 41) angeordnet ist, um Information aus dem Halbleiterspeicherelement (32, 46) mittels des Halbleiterverarbeitungselements(45)vor dem Betrieb der optischen Schreib/Lese-Vorrichtung an diese zu übertragen, wobei die optische Schreib/Lese-Vorrichtung geeignet ist, einen Anfangszustand entsprechend den zu ihr übertragenen Informationen einzunehmen, und das optische Aufzeichnungsmedium zu lesen, wobei sie dessen räumliche Konfiguration unter Verwendung der an sie übertragenen Information ausgleicht.

2. Optisches Aufzeichnungssystem nach Anspruch 1, bei dem das Aufzeichnungsmedium eine optische Platte (2) umfaßt, die Aufzeichnungsspuren besitzt, der Träger ein Kassettengehäuse (1) zur drehbaren Aufnahme der optischen Platte umfaßt, und die Halbleiterspeichervorrichtung (34) und die Verbindervorrichtung (29), die eine optische Verbindervorrichtung ist, an dem Kassettengehäuse angebracht sind.

3. Optisches Aufzeichnungssystem nach Anspruch 2, bei dem die Verbindervorrichtung (29) in der Nähe eines Bereichs (24b) des Kassettengehäuses, mit dem das Kassettengehäuse in bezug zur optischen Schreib/Lese-Vorrichtung positioniert wird, angebracht ist.

4. Optisches Aufzeichnungssystem nach Anspruch 1, bei dem der Träger einen kartenförmigen Korpus (41) umfaßt, und das optische Aufzeichnungsmedium einen optischen Aufzeichnungsfilm (42) umfaßt, der in den kartenförmigen Korpus eingebettet ist, wobei dieser optische Aufzeichnungsfilm Aufzeichnungsspuren besitzt, und das Halbleiterspeicherelement (44) und die optische Verbindervorrichtung (47) an einer anderen Stelle des kartenförmigen Korpus als der optische Aufzeichnungsfilm (46) angebracht sind.

5. Optisches Aufzeichnungssystem nach Anspruch 4, bei dem der optische Aufzeichnungsfilm (42) an einer Oberfläche des kartenförmigen Korpus (41) vorgesehen ist, während die optische Verbindervorrichtung (47a, 47b) an der anderen Oberfläche des kartenförmigen Korpus (41) vorgesehen ist.

6. Optisches Aufzeichnungssystem nach Anspruch 5, bei dem der optische Aufzeichnungsfilm (42) auf im wesentlichen der ganzen Oberfläche einer Seite des kartenförmigen Korpus (41) vorgesehen ist.

7. Optisches Aufzeichnungssystem nach einem
der vorhergehenden Ansprüche, bei dem die sich auf die für den optischen Aufzeichnungsbereich spezifischen Schreib/Lese-Bedingungen beziehende Information festgelegte Wiedergabekontrolldaten umfaßt, die zur Wiedergabe der im Aufzeichnungsbereich aufgezeichneten Information erforderlich sind.

8. Optisches Aufzeichnungssystem nach einem
der vorhergehenden Ansprüche, bei dem die sich auf die für den optischen Aufzeichnungsbereich spezifischen Schreib/Lese-Bedingungen beziehende Information Information über Defekte des optischen Aufzeichnungsbereichs enthält.

9. Optisches Aufzeichnungssystem nach einem
der vorhergehenden Ansprüche, bei dem die sich auf die für den optischen Aufzeichnungsbereich spezifischen Schreib/Lese-Bedingungen beziehende Information Information über die Aufzeichnungsempfindlichkeit des optischen Aufzeichnungsbereichs umfaßt.

10. Optisches Aufzeichnungssystem nach einem
der vorhergehenden Ansprüche, bei dem das optische Aufzeichnungsmedium eine optische Platte (2) umfaßt und die Information über die inhärente räumliche Konfiguration sich zumindest auf axialen Schlag, Neigung oder radialen Schlag bezieht.

11. Optisches Aufzeichnungssystem nach einem
der vorhergehenden Ansprüche, bei dem die Verbindervorrichtung ein lichtemittierendes Element und ein lichtdetektierendes Element umfaßt, die für die Übermittlung optischer Signale vorgesehen sind.

12. Optisches Aufzeichnungssystem nach einem beliebigen der vorhergehenden Ansprüche, bei dem das optische Aufzeichnungsmedium eine optische Platte ist, und das System umfaßt:
eine Plattenlaufwerkseinheit;
die optische Aufzeichnungsplatte (2), die in die optische Schreib/Lese-Vorrichtung eingeführt wird, um relativ zu dieser unter einem Antrieb, der von der Plattenlaufwerkseinheit auf ihre Nabe übertragen wird, rotiert zu werden, bei dem:
die Halbleiterspeichervorrichtung (32) in der optischen Aufzeichnungsplatte (2) angebracht ist, um mit dieser rotiert zu werden, und daß die Verbindervorrichtung (29) eine optische Verbindervorrichtung zur Übertragung von Information vom Halbleiterspeicherelement (32) zur optischen Schreib/Lese-Vorrichtung über eine Schnittstelle im Nabenbereich ist.

13. Optisches Plattenaufzeichnungssystem nach Anspruch 12, bei dem die optische Verbindervorrichtung Information mittels der Antriebsspindel eines Motors der Plattenlaufwerkseinheit zu einer die Platte enthaltenden Kassette überträgt.

14. Optisches Aufzeichnungssystem nach einem der Ansprüche 4 bis 6, bei dem:
der optische Aufzeichnungsfilm (42) auf einer Oberfläche des kartenförmigen Korpus eingebettet vorgesehen ist, wobei dieser optische Aufzeichnungsfilm Aufzeichnungsspuren besitzt, und das Halbleiterspeicherelement (44) und die optische Verbindervorrichtung (47) an der anderen Oberfläche des kartenförmigen Korpus angebracht sind.

## Revendications

1. Système d'enregistrement optique comportant, en association :
- un dispositif de lecture/écriture optique,
- un support (1, 70, 41),
- un milieu d'enregistrement optique (2, 42, 42a, b, 50) placé dans le support (1, 70, 41) et comportant une région d'enregistrement optique où une information est mémorisée optiquement,
- un élément mémoire à semi-conducteur (32, 46) pour stocker une information de commande se rapportant à ladite région d'enregistrement (2, 42) où est mémorisée optiquement une information, ledit élément mémoire à semi-conducteur (32, 46) étant placé en un endroit dudit support (1, 70, 41) autre que la région d'enregistrement, et
- un connecteur (29, 47) sur ledit support (1, 70, 41) pour faire passer un signal entre l'élément mémoire à semi-conducteur (32, 46) et le dispositif de lecture/écriture, ledit connecteur (29, 47) étant relié à l'élément mémoire à semi-conducteur (32, 46), un élément semi-conducteur de traitement (45) contrôlant la transmission de l'information mémorisée dans l'élément mémoire à semi-conducteur (32, 46) vers le dispositif de lecture/écriture optique et placé dans ledit support (1, 70, 41),
**caractérisé** en ce que ledit élément mémoire à semi-conducteur (32, 46) est disposé pour stocker une information concernant la configuration spatiale propre de ce milieu d'enregistrement optique particulier (2, 42, 42a, b, 50) dans son support (1, 70, 41),
et en ce que le connecteur (29, 47) est un connecteur optique placé dans ledit support (1, 70, 41) pour transmettre, via l'élément semi-conducteur de traitement (45), une information provenant de l'élément mémoire à semi-conducteur (32, 46) vers le dispositif de lecture/écriture optique avant le fonctionnement de celui-ci, ledit dispositif de lecture/écriture optique pouvant adopter une condition initiale en fonction de l'information qui lui est transmise et pouvant lire le milieu d'enregistrement optique tout en compensant la configuration spatiale de celui-ci en utilisant l'information qui lui est transmise.

2. Système d'enregistrement optique selon la revendication 1, dans lequel ledit milieu d'enregistrement est un disque optique (2) avec des pistes d'enregistrement, ledit support est un boîtier de cartouche (1) pour recevoir de façon tournante le disque optique et ledit élément mémoire à semi-conducteur (34) ainsi que ledit connecteur optique (29) sont fixés audit boîtier de cartouche.

3. Système d'enregistrement optique selon la revendication 2, dans lequel ledit connecteur optique (29) est fixé au voisinage d'une partie (24b) du boîtier de cartouche qui positionne le boîtier de cartouche par rapport au dispositif de lecture/écriture optique.

4. Système d'enregistrement optique selon la revendication 1, dans lequel ledit support est un corps de carte (41) et ledit milieu d'enregistrement optique est un film d'enregistrement optique (42) noyé dans le corps de carte, ledit film d'enregistrement optique comportant des pistes d'enregistrement, ledit élément mémoire à semi-conducteur (44) et ledit connecteur optique (47) étant fixés en un emplacement dudit corps de carte autre que le film d'enregistrement optique (46).

5. Système d'enregistrement optique selon la revendication 4, dans lequel ledit film d'enregistrement optique (42) est placé dans une surface dudit corps de carte (41) alors que ledit connecteur optique (47a, 47b) est placé dans l'autre surface dudit corps de carte (41).

6. Système d'enregistrement optique selon la revendication 5, dans lequel ledit film d'enregistrement optique (42) est placé sensiblement dans toute la surface d'un côté du corps de carte (41).

7. Système d'enregistrement optique selon l'une quelconque des précédentes revendications, dans lequel ladite information concernant les conditions de lecture/écriture spécifiques à ladite région d'enregistrement optique inclut des données de commande de reproduction prédéterminées requises pour reproduire l'information enregistrée sur la région d'enregistrement.

8. Système d'enregistrement optique selon l'une quelconque des précédentes revendications, dans lequel ladite information concernant les conditions de lecture/écriture spécifiques à ladite région d'enregistrement optique inclut une information de défaut de la région d'enregistrement optique.

9. Système d'enregistrement optique selon l'une quelconque des précédentes revendications, dans lequel ladite information concernant les conditions de lecture/écriture spécifiques à ladite région d'enregistrement optique inclut une information de sensibilité d'enregistrement de la région d'enregistrement optique.

10. Système d'enregistrement optique selon l'une quelconque des précédentes revendications, dans lequel ledit milieu d'enregistrement optique est un disque optique (2) et ladite information concernant la configuration spatiale propre est l'une au moins des informations suivantes : excentricité axiale, basculement ou excentricité radiale.

11. Système d'enregistrement optique selon l'une quelconque des précédentes revendications, dans lequel ledit connecteur comprend un élément émetteur de lumière et un élément détecteur de lumière qui sont prévus pour assurer la communication des signaux optiques.

12. Système d'enregistrement optique selon l'une quelconque des précédentes revendications, dans lequel ledit milieu d'enregistrement optique est un disque optique et le système inclut une unité d'entraînement de disque, le disque d'enregistrement optique (2) étant logé dans le dispositif de lecture/écriture optique pour y tourner par rapport à celui-ci sous l'effet de l'entraînement transmis à son moyeu par l'unité d'entraînement de disque, dans lequel ledit élément mémoire à semi-conducteur (32) est monté dans le disque d'enregistrement optique (2) pour tourner avec lui et dans lequel le connecteur (29) est un connecteur optique permettant de transmettre l'information qui provient de l'élément mémoire à semi-conducteur (32) vers le dispositif de lecture/écriture optique via une borne au niveau de la partie formant moyeu.

13. Système d'enregistrement optique à disque selon la revendication 12, dans lequel le connecteur optique transmet une information via la broche d'entraînement d'un moteur de l'unité d'entraînement de disque à une cassette contenant le disque.

14. Système d'enregistrement optique selon l'une quelconque des revendications 4 à 6, dans lequel ledit film d'enregistrement optique (42) est placé noyé sur une surface du corps de carte, ledit film d'enregistrement optique comportant des pistes d'enregistrement, ledit élément mémoire à semi-conducteur (44) et ledit connecteur optique (47) étant fixés sur l'autre surface dudit corps de carte.
